# EUROPEAN PATENT APPLICATION

(11) **EP 4 394 224 A1**
(43) Date of publication of application: **03.07.2024**
(21) Application number: 22872223.7
(22) Date of filing: 26.09.2022
(51) Int. Cl.: F16K 11/22, F16K 27/02, F16K 31/06, F25B 41/20

(54) **REVERSING VALVE AND HEAT EXCHANGE SYSTEM HAVING SAME**

(30) Priority: 24.09.2021 CN 202111124592; 24.09.2021 CN 202122327858 U
(71) Applicant: Zhejiang Dunan Artificial Environment Co., Ltd., Shaoxing, Zhejiang 311835 (CN)
(72) Inventor: ZHANG, Wenrong, Shaoxing, Zhejiang 311835 (CN); LI, Zhepeng, Shaoxing, Zhejiang 311835 (CN); JIN, Ju, Shaoxing, Zhejiang 311835 (CN); LI, Zeen, Shaoxing, Zhejiang 311835 (CN)
(74) Representative: Dehns Germany Partnerschaft mbB
(86) International application number: PCT/CN2022/121406
(87) International publication number: WO 2023/046180

(57) **Abstract**

This application provides a reversing valve and a heat exchange system with reversing valve. The reversing valve includes: a valve seat having a first flow channel, a second flow channel, a third flow channel, and a fourth flow channel, where the first flow channel has an inlet, and the second flow channel has an outlet; a first valve body controlling communication between the first flow channel and the third flow channel; a second valve body controlling communication between the first flow channel and the fourth flow channel; a third valve body controlling communication between the third flow channel and the second flow channel; and a fourth valve body controlling communication between the fourth flow channel and the second flow channel. When the reversing valve is in a first operation state, the second valve body controls the first flow channel to communicate with the fourth flow channel, allowing a refrigerant to flow out of the fourth flow channel, and the third valve body controls the third flow channel to communicate with the second flow channel, allowing the refrigerant to flow back into the third flow channel and be discharged. When the reversing valve is in a second operation state, the first valve body controls the first flow channel to communicate with the third flow channel, allowing the refrigerant to flow out of the third flow channel, and the fourth valve body controls the fourth flow channel to communicate with the second flow channel, allowing the refrigerant to flow back into the fourth flow channel and be discharged. This application resolves the problem that the refrigerant is likely to leak in four-way valves in the prior art.

## Description

### Technical Field

This present disclosure relates to the technical field of reversing valve technologies, and in particular to, a reversing valve and a heat exchange system with reversing valve.

### Background

Currently, in the field of air conditioning technologies, four-way valves are commonly used to adjust the flow direction of a refrigerant in an air conditioning system, enabling this system to switch freely between a cooling mode and a heating mode. In the art known to inventors, the flow direction of the refrigerant in the four-way valves is adjusted in this typical manner: a motor drives a piston to move, so as to adjust the flow direction of the refrigerant in the four-way valves.

However, such adjustment manner not only increases the difficulty of adjustment but causes likely refrigerant leakage, affecting the running stability and operation efficiency of the air conditioning system.

### Summary

A main objective of the disclosure is to provide a reversing valve and a heat exchange system with reversing valve, to resolve the problem in the art known to inventors that refrigerant is likely to leak in the process of switching the flow direction in the four-way valves.

To achieve the foregoing object, according to an aspect of the present disclosure, a reversing valve is provided, including a valve seat having a first flow channel, a second flow channel, a third flow channel, and a fourth flow channel, where an end of the first flow channel is an inlet, and an end of the second flow channel is an outlet; a first valve body, where the first valve body is movably disposed on the valve seat to control communication between the first flow channel and the third flow channel; a second valve body, where the second valve body is movably disposed on the valve seat to control communication between the first flow channel and the fourth flow channel; a third valve body, where the third valve body is movably disposed on the valve seat to control communication between the third flow channel and the second flow channel; and a fourth valve body, where the fourth valve body is movably disposed on the valve seat to control communication between the fourth flow channel and the second flow channel. The reversing valve has a first operation state and a second operation state. When the reversing valve is in the first operation state, the second valve body controls the first flow channel to communicate with the fourth flow channel, allowing a refrigerant to flow in from the inlet and then out of the fourth flow channel, and the third valve body controls the third flow channel to communicate with the second flow channel, allowing a refrigerant to flow back into the third flow channel and be discharged from the outlet. When the reversing valve is in the second operation state, the first valve body controls the first flow channel to communicate with the third flow channel, allowing a refrigerant to flow in from the inlet and then out of the third flow channel, and the fourth valve body controls the fourth flow channel to communicate with the second flow channel, allowing a refrigerant to flow back into the fourth flow channel and be discharged from the outlet.

In the technical solution of the present disclosure, different valve bodies are configured to control the communication state between two different flow channels. The first valve body is configured to control communication between the first flow channel and the third flow channel, the second valve body is configured to control communication between the first flow channel and the fourth flow channel, the third valve body is configured to control communication between the third flow channel and the second flow channel, and the fourth valve body is configured to control communication between the fourth flow channel and the second flow channel. The reversing valve has a first operation state and a second operation state, and when the reversing valve is in a different operation state, the mediums in the third flow channel and the fourth flow channel flow in different directions. In this way, during operation of the reversing valve, the refrigerant always enters the first flow channel from the inlet of the first flow channel and flows out of the second flow channel from its outlet. When the reversing valve is in the first operation state, the refrigerant enters the first flow channel from the inlet and flows out of the fourth flow channel, and after passing through a heat exchanger, the refrigerant flows back into the third flow channel and is discharged from the outlet of the second flow channel. When the reversing valve is in the second operation state, the refrigerant enters the first flow channel from the inlet and flows out of the third flow channel, and after passing through the heat exchanger, the refrigerant flows back into the fourth flow channel and is discharged from the outlet of the second flow channel. When the reversing valve switches between the first operation state and the second operation state, the flow direction of the refrigerant in the heat exchange system can be switched, allowing the heat exchange system to be in a different operation model (a cooling model and a heating model).

In this way, as compared with the art known to inventors where a motor drives a piston to move, so as to control the flow direction of the refrigerant in the four-way valves, the reversing valve in the present disclosure can prevent the refrigerant in the first flow channel, the second flow channel, the third flow channel, and the fourth flow channel from leaking, thus resolving the problem in the art known to inventors that refrigerant is likely to leak in the process of switching the flow direction in the four-way valves, improving the operation reliability of the reversing valve.

In some embodiments, when the reversing valve is in the first operation state, the first valve body controls cutting off of the communication between the first flow channel and the third flow channel, and the fourth valve body controls cutting off of the communication between the fourth flow channel and the second flow channel. When the reversing valve is in the second operation state, the second valve body controls cutting off of the communication between the first flow channel and the fourth flow channel, and the third valve body controls cutting off of the communication between the third flow channel and the second flow channel.

In some embodiments, the first flow channel is disposed above the third flow channel, the second flow channel is disposed below the third flow channel, and the third flow channel and the fourth flow channel are disposed at a same height.

In some embodiments, the first valve body and the second valve body are disposed at intervals along a liquid inlet direction of the first flow channel, and the fourth valve body and the third valve body are disposed at intervals along a liquid outlet direction of the second flow channel. The first valve body and the third valve body are disposed at intervals along an extension direction of the third flow channel, and the second valve body and the fourth valve body are disposed at intervals along an extension direction of the fourth flow channel.

In some embodiments, the first flow channel is parallel to the second flow channel, and the third flow channel is parallel to the fourth flow channel. The first flow channel and the third flow channel are set at an angle.

In some embodiments, the valve seat or the first valve body further includes a first valve port in communication with the third flow channel, and a valve needle of the first valve body blocks or avoids the first valve port, so as to control communication between the first flow channel and the first valve port.

In some embodiments, the valve seat or the second valve body further includes a second valve port in communication with the fourth flow channel, and a valve needle of the second valve body blocks or avoids the second valve port, so as to control communication between the first flow channel and the second valve port.

In some embodiments, the valve seat or the third valve body further includes a third valve port in communication with the second flow channel, and a valve needle of the third valve body blocks or avoids the third valve port, so as to control communication between the third flow channel and the third valve port.

In some embodiments, the valve seat or the fourth valve body further includes a fourth valve port in communication with the second flow channel, and a valve needle of the fourth valve body blocks or avoids the fourth valve port, so as to control communication between the fourth flow channel and the fourth valve port.

In some embodiments, the valve seat or the first valve body further includes a first valve port in communication with the third flow channel, and a valve needle of the first valve body blocks or avoids the first valve port, so as to control communication between the first flow channel and the first valve port; and the valve seat or the second valve body further includes a second valve port in communication with the fourth flow channel, and a valve needle of the second valve body blocks or avoids the second valve port, so as to control communication between the first flow channel and the second valve port.

In some embodiments, the valve seat or the third valve body further includes a third valve port in communication with the second flow channel, and a valve needle of the third valve body blocks or avoids the third valve port, so as to control communication between the third flow channel and the third valve port; and the valve seat or the fourth valve body further includes a fourth valve port in communication with the second flow channel, and a valve needle of the fourth valve body blocks or avoids the fourth valve port, so as to control communication between the fourth flow channel and the fourth valve port.

In some embodiments, the valve seat or the first valve body further includes a first valve port in communication with the third flow channel, and a valve needle of the first valve body blocks or avoids the first valve port, so as to control communication between the first flow channel and the first valve port. The valve seat or the second valve body further includes a second valve port in communication with the fourth flow channel, and a valve needle of the second valve body blocks or avoids the second valve port, so as to control communication between the first flow channel and the second valve port. The valve seat or the third valve body further includes a third valve port in communication with the second flow channel, and a valve needle of the third valve body blocks or avoids the third valve port, so as to control communication between the third flow channel and the third valve port. The valve seat or the fourth valve body further includes a fourth valve port in communication with the second flow channel, and a valve needle of the fourth valve body blocks or avoids the fourth valve port, so as to control communication between the fourth flow channel and the fourth valve port.

In some embodiments, the valve seat further includes a first mounting surface and a second mounting surface, the first mounting surface is higher than the second mounting surface, the first valve body and the second valve body are disposed on the first mounting surface, and the third valve body and the fourth valve body are disposed on the second mounting surface.

In some embodiments, the first valve body is a solenoid valve; or the second valve body is a solenoid valve; or the third valve body is a solenoid valve; or the fourth valve body is a solenoid valve; or the first valve body is a solenoid valve, and the second valve body is a solenoid valve; or the first valve body is a solenoid valve, and the third valve body is a solenoid valve; or the first valve body is a solenoid valve, and the fourth valve body is a solenoid valve; or the second valve body is a solenoid valve, and the third valve body is a solenoid valve; or the second valve body is a solenoid valve, and the fourth valve body is a solenoid valve; or the third valve body is a solenoid valve, and the fourth valve body is a solenoid valve; or the first valve body is a solenoid valve, the second valve body is a solenoid valve, and the third valve body is a solenoid valve; or the first valve body is a solenoid valve, the second valve body is a solenoid valve, and the fourth valve body is a solenoid valve; or the first valve body is a solenoid valve, the third valve body is a solenoid valve, and the fourth valve body is a solenoid valve; or the second valve body is a solenoid valve, the third valve body is a solenoid valve, and the fourth valve body is a solenoid valve; or the first valve body is a solenoid valve, the second valve body is a solenoid valve, the third valve body is a solenoid valve, and the fourth valve body is a solenoid valve.

According to another aspect of this application, a heat exchange system is provided, including a compressor, a reversing valve, a first heat exchange apparatus, and a second heat exchange apparatus. An exhaust port of the compressor communicates with an inlet of the reversing valve, an intake port of the compressor communicates with an outlet, the first heat exchange apparatus communicates with both a third flow channel of the reversing valve and the second heat exchange apparatus, and the second heat exchange apparatus communicates with a fourth flow channel. The reversing valve is the foregoing reversing valve.

In some embodiments, the heat exchange system further includes a control module. The control module is connected to a first valve body, a second valve body, a third valve body, and a fourth valve body of the reversing valve. The heat exchange system includes a first heat exchange state and a second heat exchange state. When the heat exchange system is in the first heat exchange state, the control module controls the reversing valve to be in a first operation state; and when the heat exchange system is in the second heat exchange state, the control module controls the reversing valve to be in a second operation state.

### Brief Description of the Drawings

The specification drawings forming a part of the disclosure are provided for a better understanding of this application. The exemplary embodiments and their descriptions in this application are intended for explaining this application and do not constitute a limitation on this application. In the accompanying drawings:
FIG. 1 illustrates a schematic diagram of a three-dimensional structure of a reversing valve according to Embodiment 1 of this application;
FIG. 2 illustrates a schematic diagram of a three-dimensional structure of the reversing valve in FIG. 1 at another angle;
FIG. 3 illustrates a front view of the reversing valve in FIG. 1;
FIG. 4 illustrates a cross-sectional view of the reversing valve in FIG. 3 along A-A;
FIG. 5 illustrates a cross-sectional view of the reversing valve in FIG. 3 along B-B;
FIG. 6 illustrates a side view of the reversing valve in FIG. 1;
FIG. 7 illustrates a cross-sectional view of the reversing valve in FIG. 6 along C-C;
FIG. 8 illustrates a cross-sectional view of the reversing valve in FIG. 6 along D-D;
FIG. 9 illustrates a schematic structural diagram of a heat exchange system according to an embodiment of this application; and
FIG. 10 illustrates a cross-sectional view of a first valve body of a reversing valve according to Embodiment 2 of this application.

The foregoing drawings include the following numeral references:
10. valve seat; 11. first flow channel; 111. inlet; 12. second flow channel; 121. outlet; 13. third flow channel; 14. fourth flow channel; 15. first valve port; 16. second valve port; 17. third valve port; 18. fourth valve port; 191. first mounting surface; 192. second mounting surface; 20. first valve body; 30. second valve body; 40. third valve body; 50. fourth valve body; 60. compressor; 61. exhaust port; 62. intake port; 70. reversing valve; 80. first heat exchange apparatus; 90. second heat exchange apparatus; 101. valve needle; 102. guide sleeve; 103. pipe inlet; and 104. pipe outlet.

### Detailed Description of the Embodiments

It should be noted that, without conflict, the embodiments and features in the embodiments in this application may be combined with each other. This application is described in detail below with reference to accompanying drawings and embodiments.

It should be noted that unless otherwise indicated, all technical and scientific terms used in this application have the same meaning as commonly understood by those skilled in the art to which this application pertains.

In this application, unless otherwise stated opposite, directional terms such as "up" and "down" used are typically in reference to the orientations shown in the accompanying drawings or with respect to the vertical, perpendicular, or gravitational direction. Similarly, for the sake of understanding and description, "left" and "right" typically refer to the left and right as shown in the accompanying drawings; "inner" and "outer" refer to the inner and outer relative to the contours of the respective components. However, the above directional terms are not intended to limit this application.

To resolve the problem in the art known to inventors that refrigerant is likely to leak in the process of switching the flow direction in the four-way valves, the disclosure provides a reversing valve and a heat exchange system with reversing valve.

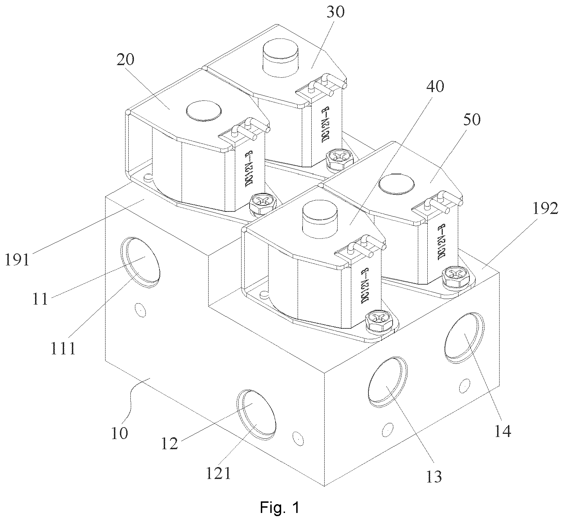

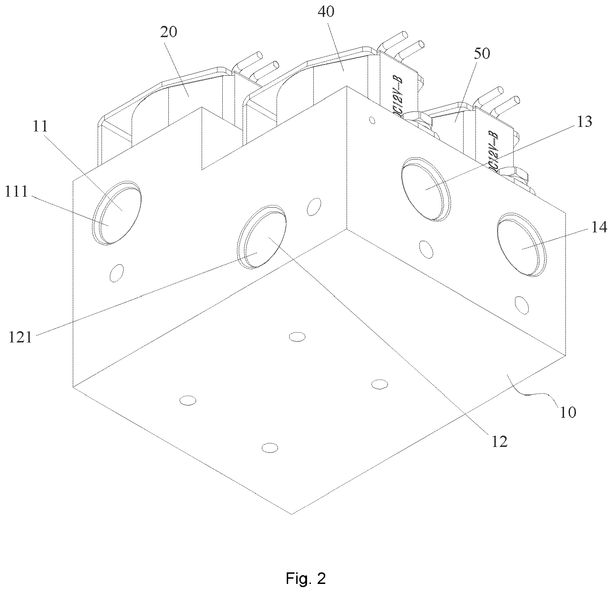

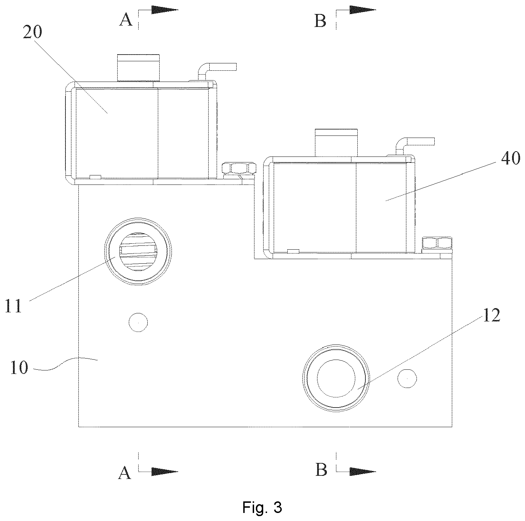

As shown in Fig. 1 to Fig. 8, the reversing valve includes a valve seat 10, a first valve body 20, a second valve body 30, a third valve body 40, and a fourth valve body 50. The valve seat 10 has a first flow channel 11, a second flow channel 12, a third flow channel 13, and a fourth flow channel 14. An end of the first flow channel 11 is an inlet 111, and an end of the second flow channel 12 is an outlet 121. The first valve body 20 is movably disposed on the valve seat 10 to control communication between the first flow channel 11 and the third flow channel 13. The second valve body 30 is movably disposed on the valve seat 10 to control communication between the first flow channel 11 and the fourth flow channel 14. The third valve body 40 is movably disposed on the valve seat 10 to control communication between the third flow channel 13 and the second flow channel 12. The fourth valve body 50 is movably disposed on the valve seat 10 to control communication between the fourth flow channel 14 and the second flow channel 12. The reversing valve includes a first operation state and a second operation state. When the reversing valve is in the first operation state, the second valve body 30 controls the first flow channel 11 to communicate with the fourth flow channel 14, allowing a refrigerant to flow in from the inlet 111 and then out of the fourth flow channel 14, and the third valve body 40 controls the third flow channel 13 to communicate with the second flow channel 12, allowing a refrigerant to flow back into the third flow channel 13 and be discharged from the outlet 121. When the reversing valve is in the second operation state, the first valve body 20 controls the first flow channel 11 to communicate with the third flow channel 13, allowing a refrigerant to flow in from the inlet 111 and then out of the third flow channel 13, and the fourth valve body 50 controls the fourth flow channel 14 to communicate with the second flow channel 12, allowing a refrigerant to flow back into the fourth flow channel 14 and be discharged from the outlet 121.

In the technical solution of the disclosure, different valve bodies are configured to control the communication state between two different flow channels. The first valve body 20 is configured to control communication between the first flow channel 11 and the third flow channel 13, the second valve body 30 is configured to control communication between the first flow channel 11 and the fourth flow channel 14, the third valve body 40 is configured to control communication between the third flow channel 13 and the second flow channel 12, and the fourth valve body 50 is configured to control communication between the fourth flow channel 14 and the second flow channel 12. The reversing valve has a first operation state and a second operation state, and when the reversing valve is in a different operation state, the mediums in the third flow channel 13 and the fourth flow channel 14 flow in different directions. In this way, during operation of the reversing valve, the refrigerant always enters the first flow channel 11 from the inlet 111 of the first flow channel 11 and flows out of the second flow channel 12 from its outlet 121. When the reversing valve is in the first operation state, the refrigerant enters the first flow channel 11 from the inlet 111 and flows out of the fourth flow channel 14, and after passing through a heat exchanger, the refrigerant flows back into the third flow channel 13 and is discharged from the outlet 121 of the second flow channel 12. When the reversing valve is in the second operation state, the refrigerant enters the first flow channel 11 from the inlet 111 and flows out of the third flow channel 13, and after passing through the heat exchanger, the refrigerant flows back into the fourth flow channel 14 and is discharged from the outlet 121 of the second flow channel 12. When the reversing valve switches between the first operation state and the second operation state, the flow direction of the refrigerant in the heat exchange system can be switched, allowing the heat exchange system to be in a different operation model (a cooling model and a heating model).

In this way, as compared with the art known to inventors where a motor drives a piston to move, so as to control the flow direction of the refrigerant in the four-way valves, the reversing valve in the embodiment can prevent the refrigerant in the first flow channel 11, the second flow channel 12, the third flow channel 13, and the fourth flow channel 14 from leaking, thus resolving the problem in the prior art that refrigerant is likely to leak in the process of switching the flow direction in the four-way valves, improving the operation reliability of the reversing valve.

In some embodiments, when the reversing valve is in the first operation state, the first valve body 20 controls cutting off of the communication between the first flow channel 11 and the third flow channel 13, and the fourth valve body 50 controls cutting off of the communication between the fourth flow channel 14 and the second flow channel 12. When the reversing valve is in the second operation state, the second valve body 30 controls cutting off of the communication between the first flow channel 11 and the fourth flow channel 14, and the third valve body 40 controls cutting off of the communication between the third flow channel 13 and the second flow channel 12. In this way, the foregoing arrangement ensures that when the reversing valve is in the first operation state or the second operation state, the refrigerant flows in a set direction in the reversing valve, improving the operation reliability of the reversing valve.

In some embodiments, when the reversing valve is in the first operation state, the second valve body 30 controls communication between the first flow channel 11 and the fourth flow channel 14, the third valve body 40 controls communication between the third flow channel 13 and the second flow channel 12, the first valve body 20 controls cutting off of the communication between the first flow channel 11 and the third flow channel 13, and the fourth valve body 50 controls cutting off of the communication between the fourth flow channel 14 and the second flow channel 12, thus ensuring the refrigerant enters the first flow channel 11 from the inlet 111 and flows out of the fourth flow channel 14. After passing through a heat exchanger, the refrigerant flows back into the third flow channel 13 and is discharged from the outlet 121 of the second flow channel 12.

In some embodiments, when the reversing valve is in the second operation state, the first valve body 20 controls communication between the first flow channel 11 and the third flow channel 13, the fourth valve body 50 controls communication between the fourth flow channel 14 and the second flow channel 12, the second valve body 30 controls cutting off of the communication between the first flow channel 11 and the fourth flow channel 14, and the third valve body 40 controls cutting off of the communication between the third flow channel 13 and the second flow channel 12, thus ensuring the refrigerant enters the first flow channel 11 from the inlet 111 and flows out of the third flow channel 13. After passing through a heat exchanger, the refrigerant flows back into the fourth flow channel 14 and is discharged from the outlet 121 of the second flow channel 12.

As shown in FIGs. 1 to 8, the first flow channel 11 is disposed above the third flow channel 13, and the second flow channel 12 is disposed below the third flow channel 13. The third flow channel 13 and the fourth flow channel 14 are disposed at the same height. In this way, during operation of the reversing valve, the first flow channel 11 selectively communicates with the third flow channel 13 or the fourth flow channel 14, and the second flow channel 12 selectively communicates with the third flow channel 13 or the fourth flow channel 14. The foregoing arrangement can ensure not only that after entering the first flow channel 11, the refrigerant can flow into the third flow channel 13 or the fourth flow channel 14 under its own weight, but that after entering the fourth flow channel 14 or the third flow channel 13, the refrigerant can flow into the second flow channel 12 under its own weight, thus improving the flow smoothness of the refrigerant in the reversing valve.

In some embodiments, the first flow channel 11, the second flow channel 12, the third flow channel 13, and the fourth flow channel 14 are circular-hole shaped. The third flow channel 13 and the fourth flow channel 14 are disposed at the same height, meaning that a central axis of the third flow channel 13 and a central axis of the fourth flow channel 14 are disposed at the same height. Along a height direction of the reversing valve, the third flow channel 13 and the fourth flow channel 14 are disposed between the first flow channel 11 and the second flow channel 12. This makes the structural layout of the flow channels in the reversing valve more proper and impact, reduces the overall size of the reversing valve, and allows the refrigerant entering the reversing valve to flow under its own weight, without the need to provide extra power, thus saving energy.

As shown in FIGs. 1 to 8, the first valve body 20 and the second valve body 30 are disposed at intervals along a liquid inlet direction of the first flow channel 11, and the fourth valve body 50 and the third valve body 40 are disposed at intervals along a liquid outlet direction of the second flow channel 12. The first valve body 20 and the third valve body 40 are disposed at intervals along an extension direction of the third flow channel 13, and the second valve body 30 and the fourth valve body 50 are disposed at intervals along an extension direction of the fourth flow channel 14. Thus, such arrangement of the first valve body 20, the second valve body 30, the third valve body 40, and the fourth valve body 50 ensures the normal use of the reversing valve, improving the running reliability of the reversing valve and allowing for more proper and impact layout of the valve bodies in the reversing valve, thus achieving small-sized design of the reversing valve.

As shown in FIGs. 1 to 4, the first flow channel 11 is parallel to the second flow channel 12, and the third flow channel 13 is parallel to the fourth flow channel 14. The first flow channel 11 and the third flow channel 13 are set at an angle. In some embodiments, an angle of 90° is present between the first flow channel 11 and the third flow channel 13. In this way, the first flow channel 11 and the second flow channel 12 are disposed on a side of the reversing valve, the third flow channel 13 and the fourth flow channel 14 are disposed on a second side of the reversing valve, and the first side is adjacent to the second side, allowing for a simpler connection relationship between the pipes of the reversing valve in the heat exchange system, making it simpler and more convenient to disassemble or assemble the reversing valve, thus reducing difficulty of the disassembly and assembly.

It should be noted that the value of the angle between the first flow channel 11 and the third flow channel 13 is not limited thereto and can be adjusted based on the operating condition and use requirement. In some embodiments, the angle between the first flow channel 11 and the third flow channel 13 can be 30°, or 45°, or 60°, or 75°.

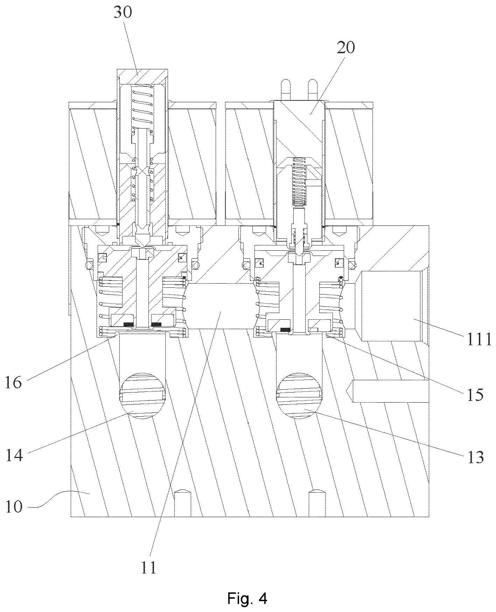

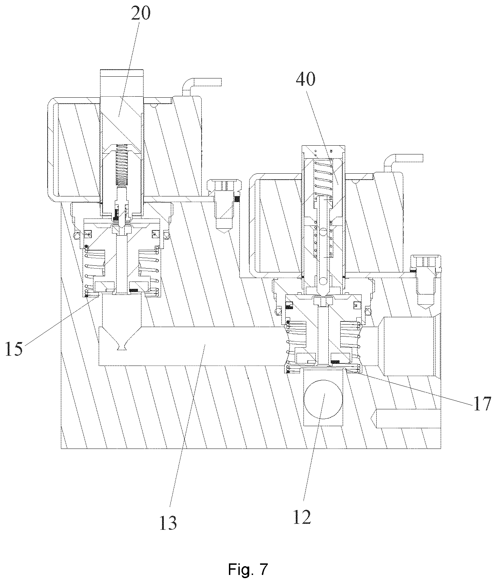

As shown in FIGs. 4 and 7, the valve seat 10 or the first valve body 20 further includes a first valve port 15 in communication with the third flow channel 13, and a valve needle of the first valve body 20 blocks or avoids the first valve port 15, so as to control communication between the first flow channel 11 and the first valve port 15. Thus, the foregoing arrangement makes it simpler and more convenient for the first valve body 20 to control cutting off of the communication between the first flow channel 11 and the third flow channel 13, reducing the control difficulty.

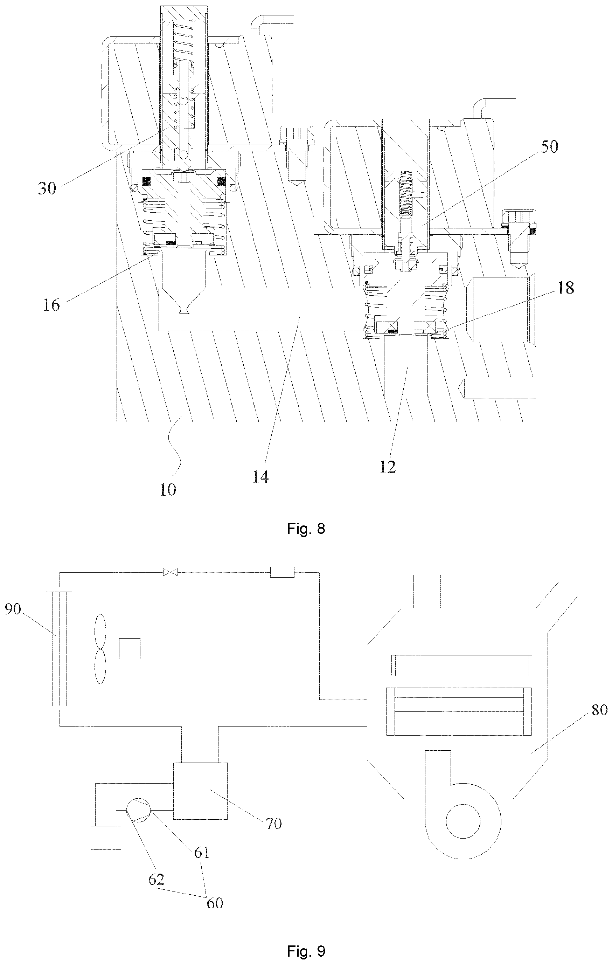

As shown in FIGs. 4 and 8, the valve seat 10 or the second valve body 30 further includes a second valve port 16 in communication with the fourth flow channel 14, and a valve needle of the second valve body 30 blocks or avoids the second valve port 16, so as to control communication between the first flow channel 11 and the second valve port 16. Thus, the foregoing arrangement makes it simpler and more convenient for the second valve body 30 to control cutting off of the communication between the first flow channel 11 and the fourth flow channel 14, reducing the control difficulty.

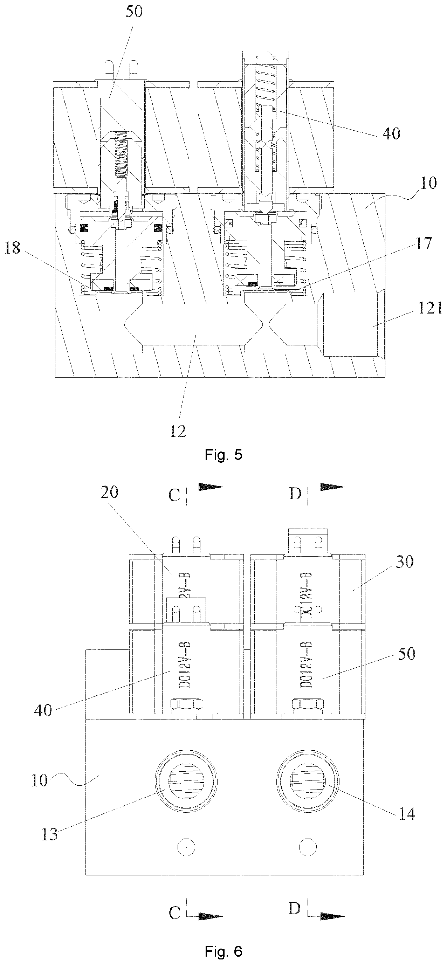

As shown in FIGs. 5 and 7, the valve seat 10 or the third valve body 40 further includes a third valve port 17 in communication with the second flow channel 12, and a valve needle of the third valve body 40 blocks or avoids the third valve port 17, so as to control communication between the third flow channel 13 and the third valve port 17. Thus, the foregoing arrangement makes it simpler and more convenient for the third valve body 40 to control cutting off of the communication between the third flow channel 13 and the second flow channel 12, reducing the control difficulty.

As shown in FIGs. 5 and 8, the valve seat 10 or the fourth valve body 50 further includes a fourth valve port 18 in communication with the second flow channel 12, and a valve needle of the fourth valve body 50 blocks or avoids the fourth valve port 18, so as to control communication between the fourth flow channel 14 and the fourth valve port 18. Thus, the foregoing arrangement makes it simpler and more convenient for the fourth valve body 50 to control cutting off of the communication between the fourth flow channel 14 and the second flow channel 12, reducing the control difficulty.

As shown in FIG. 1, the valve seat 10 further includes a first mounting surface 191 and a second mounting surface 192, the first mounting surface 191 is higher than the second mounting surface 192, the first valve body 20 and the second valve body 30 are disposed on the first mounting surface 191, and the third valve body 40 and the fourth valve body 50 are disposed on the second mounting surface 192.

In some embodiments, the first valve body 20 is a solenoid valve; or the second valve body 30 is a solenoid valve; or the third valve body 40 is a solenoid valve; or the fourth valve body 50 is a solenoid valve; or the first valve body 20 is a solenoid valve, and the second valve body 30 is a solenoid valve; or the first valve body 20 is a solenoid valve, and the third valve body 40 is a solenoid valve; or the first valve body 20 is a solenoid valve, and the fourth valve body 50 is a solenoid valve; or the second valve body 30 is a solenoid valve, and the third valve body 40 is a solenoid valve; or the second valve body 30 is a solenoid valve, and the fourth valve body 50 is a solenoid valve; or the third valve body 40 is a solenoid valve, and the fourth valve body 50 is a solenoid valve; or the first valve body 20 is a solenoid valve, the second valve body 30 is a solenoid valve, and the third valve body 40 is a solenoid valve; or the first valve body 20 is a solenoid valve, the second valve body 30 is a solenoid valve, and the fourth valve body 50 is a solenoid valve; or the first valve body 20 is a solenoid valve, the third valve body 40 is a solenoid valve, and the fourth valve body 50 is a solenoid valve; or the second valve body 30 is a solenoid valve, the third valve body 40 is a solenoid valve, and the fourth valve body 50 is a solenoid valve; or the first valve body 20 is a solenoid valve, the second valve body 30 is a solenoid valve, the third valve body 40 is a solenoid valve, and the fourth valve body 50 is a solenoid valve.

In some embodiments, the first valve body 20 is a solenoid valve. In this way, the solenoid valve is powered on or off to control the communication between the first flow channel 11 and the third flow channel 13, making it simpler or more convenient for the worker or user to operate the first valve body 20, thus reducing the control difficulty. In addition, the foregoing arrangement improves the smartness level of the reversing valve.

In some embodiments, the second valve body 30 is a solenoid valve. In this way, the solenoid valve is powered on or off to control the communication between the first flow channel 11 and the fourth flow channel 14, making it simpler or more convenient for the worker or user to operate the second valve body 30, thus reducing the control difficulty. In addition, the foregoing arrangement improves the smartness level of the reversing valve.

In some embodiments, the third valve body 40 is a solenoid valve. In this way, the solenoid valve is powered on or off to control the communication between the third flow channel 13 and the second flow channel 12, making it simpler or more convenient for the worker or user to operate the third valve body 40, thus reducing the control difficulty. In addition, the foregoing arrangement improves the smartness level of the reversing valve.

In some embodiments, the fourth valve body 50 is a solenoid valve. In this way, the solenoid valve is powered on or off to control the communication between the fourth flow channel 14 and the second flow channel 12, making it simpler or more convenient for the worker or user to operate the fourth valve body 50, thus reducing the control difficulty. In addition, the foregoing arrangement improves the smartness level of the reversing valve.

In some embodiments, the first valve body 20 and the fourth valve body 50 are always closed (piston components of the solenoid valves close the valve port when power is off), and the second valve body 30 and the third valve body 40 are always opened (piston components of the solenoid valves avoid the valve port when power is off). Thus, when the reversing valve is not powered on, the refrigerant enters the first flow channel 11 from the inlet 111 and flows out of the fourth flow channel 14, and after passing through the heat exchanger, the refrigerant flows back into the third flow channel 13 and is charged from the outlet 121 of the second flow channel 12. After the worker powers on the reversing valve, the refrigerant enters the first flow channel 11 from the inlet 111 and flows out of the third flow channel 13. After passing through the heat exchanger, the refrigerant flows back into the fourth flow channel 14 and is discharged from the outlet 121 of the second flow channel 12, so as to achieve switching between the third flow channel 13 and the fourth flow channel 14.

It should be noted that the types of the first valve body 20, the second valve body 30, the third valve body 40, and the fourth valve body 50 are not limited thereto and can be adjusted based on the operating condition and use requirement.

In some embodiments, the first valve body 20 and the fourth valve body 50 are always opened (piston components of the solenoid valves avoid the valve port when power is off), and the second valve body 30 and the third valve body 40 are always closed (piston components of the solenoid valves close the valve port when power is off). In this way, when the reversing valve is not powered on, the refrigerant enters the first flow channel 11 from the inlet 111 and flows out of the third flow channel 13. After passing through the heat exchanger, the refrigerant flows back into the fourth flow channel 14 and is discharged from the outlet 121 of the second flow channel 12. After the worker powers on the reversing valve, the refrigerant enters the first flow channel 11 from the inlet 111 and flows out of the fourth flow channel 14. After passing through the heat exchanger, the refrigerant flows back into the third flow channel 13 and is discharged from the outlet 121 of the second flow channel 12, so as to achieve switching between the third flow channel 13 and the fourth flow channel 14.

In some embodiments, the first valve body 20, the second valve body 30, the third valve body 40, and the fourth valve body 50 are always closed (piston components of the solenoid valves close the valve port when power is off). In this way, when the first valve body 20 and the fourth valve body 50 are powered on and the second valve body 30 and the third valve body 40 are not powered on, the refrigerant enters the first flow channel 11 from the inlet 111 and flows out of the third flow channel 13. After passing through the heat exchanger, the refrigerant flows back into the fourth flow channel 14 and is discharged from the outlet 121 of the second flow channel 12. When the second valve body 30 and the third valve body 40 are powered on and the first valve body 20 and the fourth valve body 50 are not powered on, the refrigerant enters the first flow channel 11 from the inlet 111 and flows out of the fourth flow channel 14. After passing through the heat exchanger, the refrigerant flows back into the third flow channel 13 and is charged from the outlet 121 of the second flow channel 12.

In some embodiments, the first valve body 20, the second valve body 30, the third valve body 40, and the fourth valve body 50 are always opened (piston components of the solenoid valves avoid the valve port when power is off). In this way, when the first valve body 20 and the fourth valve body 50 are powered on and the second valve body 30 and the third valve body 40 are not powered on, the refrigerant enters the first flow channel 11 from the inlet 111 and flows out of the fourth flow channel 14. After passing through the heat exchanger, the refrigerant flows back into the third flow channel 13 and is discharged from the outlet 121 of the second flow channel 12. When the second valve body 30 and the third valve body 40 are powered on and the first valve body 20 and the fourth valve body 50 are not powered on, the refrigerant enters the first flow channel 11 from the inlet 111 and flows out of the third flow channel 13. After passing through the heat exchanger, the refrigerant flows back into the fourth flow channel 14 and is charged from the outlet 121 of the second flow channel 12.

As shown in FIG. 9, this application further provides a heat exchange system, including a compressor 60, a reversing valve 70, a first heat exchange apparatus 80, and a second heat exchange apparatus 90. An exhaust port 61 of the compressor 60 communicates with an inlet 111 of the reversing valve 70, an intake port 62 of the compressor 60 communicates with an outlet 121, the first heat exchange apparatus 80 communicates with both a third flow channel 13 of the reversing valve 70 and the second heat exchange apparatus 90, and the second heat exchange apparatus 90 communicates with a fourth flow channel 14. The reversing valve 70 is the foregoing reversing valve 70.

In some embodiments, when the reversing valve 70 is in the first operation state (when the reversing valve 70 is not powered on), the refrigerant discharged from the exhaust port 61 of the compressor 60 enters the first flow channel 11 of the reversing valve 70 and flows into the first heat exchange apparatus 80 through the fourth flow channel 14. After flowing in the second heat exchange apparatus 90, the refrigerant enters the third flow channel 13 and flows back into the intake port 62 of the compressor through the second flow channel 12. When the reversing valve 70 is in the second operation state (after the reversing valve 70 is powered on), the refrigerant discharged from the exhaust port 61 of the compressor 60 enters the first flow channel 11 of the reversing valve 70 and flows into the second heat exchange apparatus 90 through the third flow channel 13. After flowing in the first heat exchange apparatus 80, the refrigerant enters the fourth flow channel 14 and flows back into the intake port 62 of the compressor through the second flow channel 12.

In some embodiments, the heat exchange system further includes a control module. The control module is connected to a first valve body 20, a second valve body 30, a third valve body 40, and a fourth valve body 50 of the reversing valve 70. The heat exchange system has a first heat exchange state and a second heat exchange state. When the heat exchange system is in the first heat exchange state, the control module controls the reversing valve 70 to be in a first operation state. When the heat exchange system is in the second heat exchange state, the control module controls the reversing valve 70 to be in a second operation state.

### Embodiment 2

The reversing valve in Embodiment 2 is different from that in Embodiment 1 in that the first valve bodies 20, the second valve bodies 30, the third valve bodies 40, and the fourth valve bodies 50 have different structures.

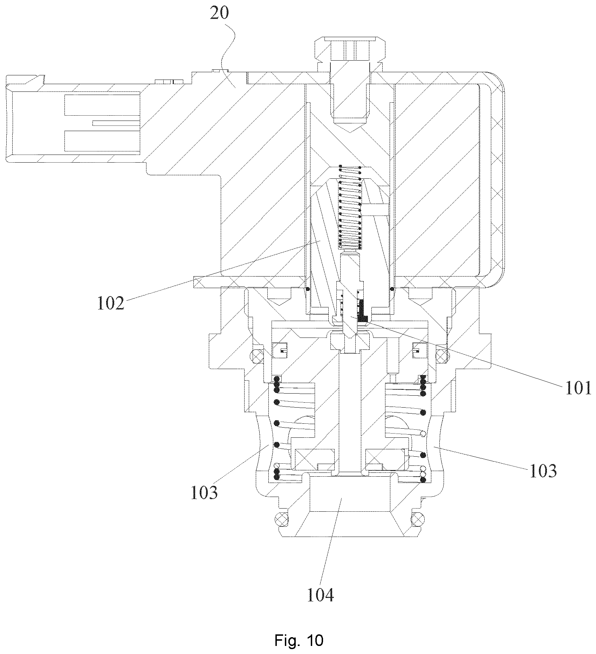

As shown in FIG. 10, the first valve body 20 is a valve terminal. The valve terminal includes a valve needle 101, a guide sleeve 102, a pipe inlet 103, and a pipe outlet 104. The valve needle 101 is movably disposed in the guide sleeve 102, to block or avoid a pipe outlet 104. A refrigerant can run through the first valve body 20 via two pipe inlets 103, so as to enter the flow channel.

In some embodiments, the second valve body 30 is a valve terminal.

In some embodiments, the third valve body 40 is a valve terminal.

In some embodiments, the fourth valve body 50 is a valve terminal.

From the above description, it can be seen that the foregoing embodiments achieve the following technical effects:
Different valve bodies are configured to control the communication state between two different flow channels. The first valve body is configured to control communication between the first flow channel and the third flow channel, the second valve body is configured to control communication between the first flow channel and the fourth flow channel, the third valve body is configured to control communication between the third flow channel and the second flow channel, and the fourth valve body is configured to control communication between the fourth flow channel and the second flow channel. The reversing valve has a first operation state and a second operation state, and when the reversing valve is in a different operation state, the mediums in the third flow channel and the fourth flow channel flow in different directions. In this way, during operation of the reversing valve, the refrigerant always enters the first flow channel from the inlet of the first flow channel and flows out of the second flow channel from its outlet. When the reversing valve is in the first operation state, the refrigerant enters the first flow channel from the inlet and flows out of the fourth flow channel. After passing through a heat exchanger, the refrigerant flows back into the third flow channel and is discharged from the outlet of the second flow channel. When the reversing valve is in the second operation state, the refrigerant enters the first flow channel from the inlet and flows out of the third flow channel. After passing through the heat exchanger, the refrigerant flows back into the fourth flow channel and is discharged from the outlet of the second flow channel. When the reversing valve switches between the first operation state and the second operation state, the flow direction of the refrigerant in the heat exchange system can be switched, allowing the heat exchange system to be in a different operation model (a cooling model and a heating model).

In this way, as compared with the prior art where a motor drives a piston to move, so as to control the flow direction of the refrigerant in the four-way valves, the reversing valve in this application can prevent the refrigerant in the first flow channel, the second flow channel, the third flow channel, and the fourth flow channel from leaking, thus resolving the problem in the prior art that refrigerant is likely to leak in the process of switching the flow direction of the four-way valves, improving the operation reliability of the reversing valve.

Apparently, the foregoing embodiments described are merely some rather than all of the embodiments of this application. All other embodiments obtained by persons of ordinary skill in the art based on the embodiments of this application without creative efforts shall fall within the protection scope of this application.

It should be noted that the terms used herein are solely for describing specific implementations and are not intended to limit exemplary implementations of this application. As used herein, unless otherwise indicated by context, a singular form is intended to also include a plural form. Additionally, it should be understood that when the term "include" and/or "comprise" is used in this specification, it indicates the presence of features, steps, operations, devices, assemblies, and/or their combinations.

It should be noted that the terms "first", "second", and the like in this specification and claims of this application and the foregoing accompany drawings are used to distinguish between similar objects rather than to describe a specific order or sequence. It should be understood that the data used in this way is interchangeable in appropriate circumstances so that the implementations of this application described herein can be implemented in other orders than the order illustrated or described herein.

## Claims

1. A reversing valve, comprising:
a valve seat (10) comprising a first flow channel (11), a second flow channel (12), a third flow channel (13), and a fourth flow channel (14), wherein an end of the first flow channel (11) is an inlet (111), and an end of the second flow channel (12) is an outlet (121);
a first valve body (20), wherein the first valve body (20) is movably disposed on the valve seat (10) to control communication between the first flow channel (11) and the third flow channel (13);
a second valve body (30), wherein the second valve body (30) is movably disposed on the valve seat (10) to control communication between the first flow channel (11) and the fourth flow channel (14);
a third valve body (40), wherein the third valve body (40) is movably disposed on the valve seat (10) to control communication between the third flow channel (13) and the second flow channel (12); and
a fourth valve body (50), wherein the fourth valve body (50) is movably disposed on the valve seat (10) to control communication between the fourth flow channel (14) and the second flow channel (12);
wherein the reversing valve comprises a first operation state and a second operation state;
when the reversing valve is in the first operation state, the second valve body (30) controls the first flow channel (11) to communicate with the fourth flow channel (14), allowing a refrigerant to flow in from the inlet (111) and then out of the fourth flow channel (14), and the third valve body (40) controls the third flow channel (13) to communicate with the second flow channel (12), allowing a refrigerant to flow back into the third flow channel (13) and be discharged from the outlet (121); and
when the reversing valve is in the second operation state, the first valve body (20) controls the first flow channel (11) to communicate with the third flow channel (13), allowing a refrigerant to flow in from the inlet (111) and then out of the third flow channel (13), and the fourth valve body (50) controls the fourth flow channel (14) to communicate with the second flow channel (12), allowing a refrigerant to flow back into the fourth flow channel (14) and be discharged from the outlet (121).

2. The reversing valve as claimed in claim 1, wherein when the reversing valve is in the first operation state, the first valve body (20) controls cutting off of the communication between the first flow channel (11) and the third flow channel (13), and the fourth valve body (50) controls cutting off of the communication between the fourth flow channel (14) and the second flow channel (12); and when the reversing valve is in the second operation state, the second valve body (30) controls cutting off of the communication between the first flow channel (11) and the fourth flow channel (14), and the third valve body (40) controls cutting off of the communication between the third flow channel (13) and the second flow channel (12).

3. The reversing valve as claimed in claim 1, wherein the first flow channel (11) is disposed above the third flow channel (13), the second flow channel (12) is disposed below the third flow channel (13), and the third flow channel (13) and the fourth flow channel (14) are disposed at a same height.

4. The reversing valve as claimed in claim 1, wherein the first valve body (20) and the second valve body (30) are disposed at intervals along a liquid inlet direction of the first flow channel (11), and the fourth valve body (50) and the third valve body (40) are disposed at intervals along a liquid outlet direction of the second flow channel (12); and the first valve body (20) and the third valve body (40) are disposed at intervals along an extension direction of the third flow channel (13), and the second valve body (30) and the fourth valve body (50) are disposed at intervals along an extension direction of the fourth flow channel (14).

5. The reversing valve as claimed in claim 1, wherein the first flow channel (11) is parallel to the second flow channel (12), and the third flow channel (13) is parallel to the fourth flow channel (14), wherein the first flow channel (11) and the third flow channel (13) are set at an angle.

6. The reversing valve as claimed in claim 1, wherein the valve seat (10) or the first valve body (20) further comprises a first valve port (15) in communication with the third flow channel (13), and a valve needle of the first valve body (20) blocks or avoids the first valve port (15), so as to control communication between the first flow channel (11) and the first valve port (15).

7. The reversing valve as claimed in claim 1, wherein the valve seat (10) or the second valve body (30) further comprises a second valve port (16) in communication with the fourth flow channel (14), and a valve needle of the second valve body (30) blocks or avoids the second valve port (16), so as to control communication between the first flow channel (11) and the second valve port (16).

8. The reversing valve as claimed in claim 1, wherein the valve seat (10) or the third valve body (40) further comprises a third valve port (17) in communication with the second flow channel (12), and a valve needle of the third valve body (40) blocks or avoids the third valve port (17), so as to control communication between the third flow channel (13) and the third valve port (17).

9. The reversing valve as claimed in claim 1, wherein the valve seat (10) or the fourth valve body (50) further comprises a fourth valve port (18) in communication with the second flow channel (12), and a valve needle of the fourth valve body (50) blocks or avoids the fourth valve port (18), so as to control communication between the fourth flow channel (14) and the fourth valve port (18).

10. The reversing valve as claimed in claim 1, wherein the valve seat (10) or the first valve body (20) further comprises a first valve port (15) in communication with the third flow channel (13), and a valve needle of the first valve body (20) blocks or avoids the first valve port (15), so as to control communication between the first flow channel (11) and the first valve port (15); and the valve seat (10) or the second valve body (30) further comprises a second valve port (16) in communication with the fourth flow channel (14), and a valve needle of the second valve body (30) blocks or avoids the second valve port (16), so as to control communication between the first flow channel (11) and the second valve port (16).

11. The reversing valve as claimed in claim 1, wherein the valve seat (10) or the third valve body (40) further comprises a third valve port (17) in communication with the second flow channel (12), and a valve needle of the third valve body (40) blocks or avoids the third valve port (17), so as to control communication between the third flow channel (13) and the third valve port (17); and the valve seat (10) or the fourth valve body (50) further comprises a fourth valve port (18) in communication with the second flow channel (12), and a valve needle of the fourth valve body (50) blocks or avoids the fourth valve port (18), so as to control communication between the fourth flow channel (14) and the fourth valve port (18).

12. The reversing valve as claimed in claim 1, wherein
the valve seat (10) or the first valve body (20) further comprises a first valve port (15) in communication with the third flow channel (13), and a valve needle of the first valve body (20) blocks or avoids the first valve port (15), so as to control communication between the first flow channel (11) and the first valve port (15);
the valve seat (10) or the second valve body (30) further comprises a second valve port (16) in communication with the fourth flow channel (14), and a valve needle of the second valve body (30) blocks or avoids the second valve port (16), so as to control communication between the first flow channel (11) and the second valve port (16);
the valve seat (10) or the third valve body (40) further comprises a third valve port (17) in communication with the second flow channel (12), and a valve needle of the third valve body (40) blocks or avoids the third valve port (17), so as to control communication between the third flow channel (13) and the third valve port (17); and
the valve seat (10) or the fourth valve body (50) further comprises a fourth valve port (18) in communication with the second flow channel (12), and a valve needle of the fourth valve body (50) blocks or avoids the fourth valve port (18), so as to control communication between the fourth flow channel (14) and the fourth valve port (18).

13. The reversing valve as claimed in claim 1, wherein the valve seat (10) further comprises a first mounting surface (191) and a second mounting surface (192), the first mounting surface (191) is higher than the second mounting surface (192), the first valve body (20) and the second valve body (30) are disposed on the first mounting surface (191), and the third valve body (40) and the fourth valve body (50) are disposed on the second mounting surface (192).

14. The reversing valve as claimed in claim 1, wherein
the first valve body (20) is a solenoid valve; or
the second valve body (30) is a solenoid valve; or
the third valve body (40) is a solenoid valve; or
the fourth valve body (50) is a solenoid valve; or
the first valve body (20) is a solenoid valve, and the second valve body (30) is a solenoid valve; or
the first valve body (20) is a solenoid valve, and the third valve body (40) is a solenoid valve; or
the first valve body (20) is a solenoid valve, and the fourth valve body (50) is a solenoid valve; or
the second valve body (30) is a solenoid valve, and the third valve body (40) is a solenoid valve; or
the second valve body (30) is a solenoid valve, and the fourth valve body (50) is a solenoid valve; or
the third valve body (40) is a solenoid valve, and the fourth valve body (50) is a solenoid valve; or
the first valve body (20) is a solenoid valve, the second valve body (30) is a solenoid valve, and the third valve body (40) is a solenoid valve; or
the first valve body (20) is a solenoid valve, the second valve body (30) is a solenoid valve, and
the fourth valve body (50) is a solenoid valve; or
the first valve body (20) is a solenoid valve, the third valve body (40) is a solenoid valve, and the fourth valve body (50) is a solenoid valve; or
the second valve body (30) is a solenoid valve, the third valve body (40) is a solenoid valve, and the fourth valve body (50) is a solenoid valve; or
the first valve body (20) is a solenoid valve, the second valve body (30) is a solenoid valve, the third valve body (40) is a solenoid valve, and the fourth valve body (50) is a solenoid valve.

15. A heat exchange system, comprising a compressor (60), a reversing valve (70), a first heat exchange apparatus (80), and a second heat exchange apparatus (90), wherein an exhaust port (61) of the compressor (60) communicates with an inlet (111) of the reversing valve (70), an intake port (62) of the compressor (60) communicates with an outlet (121), the first heat exchange apparatus (80) communicates with both a third flow channel (13) of the reversing valve (70) and the second heat exchange apparatus (90), and the second heat exchange apparatus (90) communicates with a fourth flow channel (14); wherein the reversing valve (70) is the reversing valve (70) as claimed in any one of claims 1 to 14.

16. The heat exchange system as claimed in claim 15, further comprising:
a control module, wherein the control module is connected to a first valve body (20), a second valve body (30), a third valve body (40), and a fourth valve body (50) of the reversing valve (70); wherein the heat exchange system comprises a first heat exchange state and a second heat exchange state, when the heat exchange system is in the first heat exchange state, the control module controls the reversing valve (70) to be in a first operation state; and when the heat exchange system is in the second heat exchange state, the control module controls the reversing valve (70) to be in a second operation state.
